**Europäisches Patentamt**

**European Patent Office**

**Office européen des brevets**

(19)

(11) Veröffentlichungsnummer: **0 103 217**
**B1**

(12) ## EUROPÄISCHE PATENTSCHRIFT

(45) Veröffentlichungstag der Patentschrift:
08.04.87

(51) Int. Cl.⁴: **G 02 C 11/00**

(21) Anmeldenummer: **83108309.2**

(22) Anmeldetag: **24.08.83**

(54) **Brillenlinse mit Kennzeichnung und/oder Markierung und Verfahren zur Herstellung der Kennzeichnung und/oder Markierung.**

(30) Priorität: **10.09.82 DE 3233590**

(43) Veröffentlichungstag der Anmeldung:
**21.03.84 Patentblatt 84/12**

(45) Bekanntmachung des Hinweises auf die Patenterteilung:
**08.04.87 Patentblatt 87/15**

(84) Benannte Vertragsstaaten:
**AT CH DE FR GB IT LI NL SE**

(56) Entgegenhaltungen:
**FR-A-2 513 771
US-A-3 880 631
US-A-4 145 125**

(73) Patentinhaber: **Firma Carl Zeiss, D-7920
Heidenheim (Brenz) (DE)**
(84) Benannte Vertragsstaaten: **CH DE FR IT LI NL SE AT**

(73) Patentinhaber: **CARL ZEISS- STIFTUNG
HANDELND ALS CARL ZEISS, D-7920
Heidenheim (Brenz) (DE)**
(84) Benannte Vertragsstaaten: **GB**

(72) Erfinder: **Daniels, Erwin J., Böhmerwaldstrasse 33,
D-7080 Aalen (DE)**
Erfinder: **Kratzer, Bernd, Dipl.- Phys.,
Kälblesrainweg 81, D-7080 Aalen (DE)**
Erfinder: **Schürle, Hermann, Bischof- Fischer-
Strasse 110, D-7080 Aalen (DE)**

## Beschreibung

Die Erfindung betrifft eine Brillenlinse mit einer reflexvermindernden Schicht und einer für den Brillenträger praktisch nicht sichtbaren Kennzeichnung und/oder Markierung.

Brillenlinsen sind meist mit einer Kennzeichnung versehen, aus der der Hersteller hervorgeht. Das ist insbesondere für Reklamationen wichtig, die evtl. erst nach einer gewissen Benutzungszeit erfolgen. Daher müssen derartige Kennzeichnungen auf den Brillenlinsen selbst in dauerhafter Form angebracht sein. Auf der anderen Seite sollen sie aber den Brillenträger bei der normalen Benutzung der Brille nicht stören, d.h. nicht sichtbar sein.

Bei nichtrotationssymmetrischen Brillenlinsen (z.B. Gleitsichtlinsen, torischen Linsen) ist es außerdem notwendig, die Brillenlinsen mit Markierungen zu versehen, die dem Augenoptiker eine Kontrolle für das einwandfreie Einpassen der Brillenlinsen in das Brillengestell ermöglichen. Derartige Markierungen sollen natürlich ebenfalls für den Brillenträger unsichtbar sein.

Es ist bekannt, Kennzeichnungen und/oder Markierungen durch sehr feine mechanische Gravuren auf den Brillenlinsen anzubringen. Dieses Verfahren ist recht aufwendig und teuer. Es ist ferner bekannt, Ätzzeichen durch Herauslaugen von Glasbestandteilen herzustellen. Da hierfür vorher alle übrigen Teile der Brillenlinse mit einem Lack o.ä. abgedeckt werden müssen, der später wieder entfernt wird, ist auch dieses Verfahren sehr aufwendig. Schließlich sind sog. Hauchzeichen bekannt, bei denen gewisse Substanzen mit Stempeln in Form der Kennzeichnungen und/oder Markierungen auf die Brillenlinsen gebracht werden und dadurch eine unterschiedliche Benetzbarkeit gegenüber der übrigen Oberfläche der Brillenlinse ergeben. Dabei können die Kennzeichnungen und/oder Markierungen durch Anhauchen für kurze Zeit sichtbar gemacht werden. Ihr Nachteil liegt in der begrenzten Haltbarkeit. Allen aufgeführten Verfahren ist gemeinsam, daß sie sehr sorgfältig, d.h. mit relativ viel Aufwand, ausgeführt werden müssen, damit einerseits eine genügend gute Sichtbarkeit für den Augenoptiker erreicht wird und andererseits der Brillenträger praktisch nichts davon merkt. Diese einander ziemlich widersprechenden Forderungen lassen sich nur durch die Einhaltung von engen Toleranzen erreichen.

Derartige enge Toleranzen werden technisch noch am besten beherrscht durch ein ebenfalls bekanntes Verfahren, bei dem geeignete Substanzen auf die Brillenlinsen mit Hilfe von Masken oder Schablonen aufgedampft werden. Die Masken oder Schablonen sind dabei in Form der Kennzeichnung und/oder Markierung ausgespart, so daß die Substanz nur in der Form der Kennzeichnung und/oder Markierung auf die Brillenlinse gelangt. Bei Schablonen, die in einem wenn auch geringen Abstand vor den Brillenlinsen angeordnet werden, tritt jedoch der Nachteil auf, daß die Kennzeichnungen und/oder Markierungen nicht richtig randscharf werden.

Aus der AT-PS 346 627 sind Aufdampfmasken aus einer metallischen Suspension für die Herstellung von dielektrischen Schichten in mustermäßiger Verteilung, z.B. für Platten mit Phasenringen, Filterbelägen, die nur einen Teil der Filterplatte bedecken, sowie für dekorative Schriften und Ziermuster bekannt. Die Metallschicht wird als abdeckender, maskenbildender Belag verwendet, der nach dem Aufdampfen der dielektrischen Schicht durch ein Lösungsmittel wieder abgelöst werden muß.

Es liegt auf der Hand, daß auch derartige Verfahren trotz ihrer guten Ergebnisse für einen Massenartikel wie Brillenlinsen durch die komplizierte Maskenherstellung, den Aufdampfvorgang und die umständliche Maskenbeseitigung zu aufwendig und damit zu teuer sind.

Der Erfindung liegt daher die Aufgabe zugrunde, eine Brillenlinse mit einer Kennzeichnung und/oder Markierung, die für den Augenoptiker gut sichtbar ist, vom Brillenträger aber praktisch nicht bemerkt wird, zu schaffen und ein preiswertes Herstellverfahren für die Kennzeichnung und/oder Markierung anzugeben.

Die gestellte Aufgabe wird erfindungsgemäß dadurch gelöst, daß die Kennzeichnung und/oder Markierung in der reflexvermindernden Schicht in Form von mindestens einem aus dieser Schicht ausgesparten Bereich enthalten ist. Ein vorteilhaftes Herstellverfahren für eine derartige Brillenlinse zeichnet sich dadurch aus, daß auf die Brillenlinse eine abwischbar haftende Substanz in dem für die Kennzeichnung und/oder Markierung auszusparenden Bereich aufgebracht wird, daß anschließend eine reflexvermindernde Schicht auf das gesamte Brillenglas aufgebracht wird und daß zu einem späteren Zeitpunkt die abwischbar haftende Substanz einschließlich der auf sie aufgebrachten reflexvermindernden Schicht abgewischt wird.

Die Kennzeichnung und/oder Markierung wird also nicht wie bisher in gesonderten Arbeitsvorgängen auf die Brillenlinse aufgebracht, sondern wird in andere Arbeitsvorgänge integriert. Die meisten Brillenlinsen werden heute ohnehin mit einer reflexvermindernden Schicht versehen. Der einzige zusätliche Arbeitsvorgang besteht im Aufbringen der abwischbar haftenden Substanz; das spätere Abwischen mitsamt der reflexvermindern den Schicht erfolgt nach dem Einschleifen durch den Augenoptiker, der die Brillenlinse während seiner Tätigkeit ohnehin etliche Male durch Abwischen säubert.

In einer vorteilhaften Ausgestaltung der Erfindung wird für die abwischbar haftende Substanz eine zusätzlich gut sichtbare Substanz verwendet. Dadurch ist die Kennzeichnung und/oder Markierung vor dem ersten Abwischen besonders gut sichtbar. Das erleichtert dem Augenoptiker die Arbeit.

Der ausgesparte Bereich bzw. die ausgesparten Bereiche können direkt in der Form der Kennzeichnung und/oder Markierung erfolgen oder sie können die Kennzeichnung und/oder Markierung umgeben. So können z.B. die Buchstaben C und Z direkt in der reflexmindernden Schicht ausgespart werden oder die Buchstaben bleiben Teil der reflexvermindernden Schicht und werden einzeln oder gemeinsam von einem ausgesparten Bereich umgeben. Das gleiche gilt für Markierungen. Hier hat eine Aussparung um die Markierung den Vorteil, daß die Markierung sehr fein gemacht werden kann und daß sie trotz dieser Feinheit durch einen relativ großen ausgesparten Bereich um die Markierung herum leicht gefunden werden kann.

In einer besonders vorteilhaften Ausgestaltung der Erfindung wird die abwischbar haftende Substanz mit einem Stempel auf die Brillenlinse aufgebracht. Das erfolgt zweckmäßigerweise nach dem Reinigungsvorgang, der vor dem Aufdampfen der reflexvermindernden Schicht ausgeführt wird. Die Erfahrung hat gezeigt, daß normale Stempelfarbe ausreichend ist.

In einer anderen vorteilhaften Ausgestaltung wird die abwischbar haftende Substanz durch eine Schablone, die dicht vor der Brillenlinse angeordnet ist, auf die Brillenlinse aufgesprüht. Ebenfalls brauchbar ist das bekannte Siebdruckverfahren.

In einer weiteren besonders vorteilhaften Ausgestaltung der Erfindung wird die abwischbar haftende Substanz im sog. Tampondruckverfahren aufgebracht. Bei diesem Verfahren hat eine Platte Ausnehmungen in der Form des gewünschten Druckmusters. Diese Ausnehmungen werden mit einer geeigneten Druckfarbe ausgefüllt; die überflüssige Farbe wird abgewischt. Anschließend wird das Druckmuster mit einem Tampon abgenommen und auf die Brillenlinse übertragen. In diesem Fall erfolgt der Druckprozeß zweckmäßigerweise vor dem Reinigungsvorgang, der vor dem Aufdampfen der reflexvermindernden Schicht ausgeführt wird. Daher muß eine Druckfarbe verwendet werden, welche die Ultraschallwäsche unverändert übersteht. Dafür eignet sich z.B. die im Handel erhältliche Zweikomponentenfarbe Wiedosil Z mit Härter ZH der Fa. Wiedehold. In diesem Fall wird später die Kennzeichnung und/oder Markierung mit einem Lösungsmittel, z.B. mit Abbeizmittel X 500 der Fa. Antony, aogewischt.

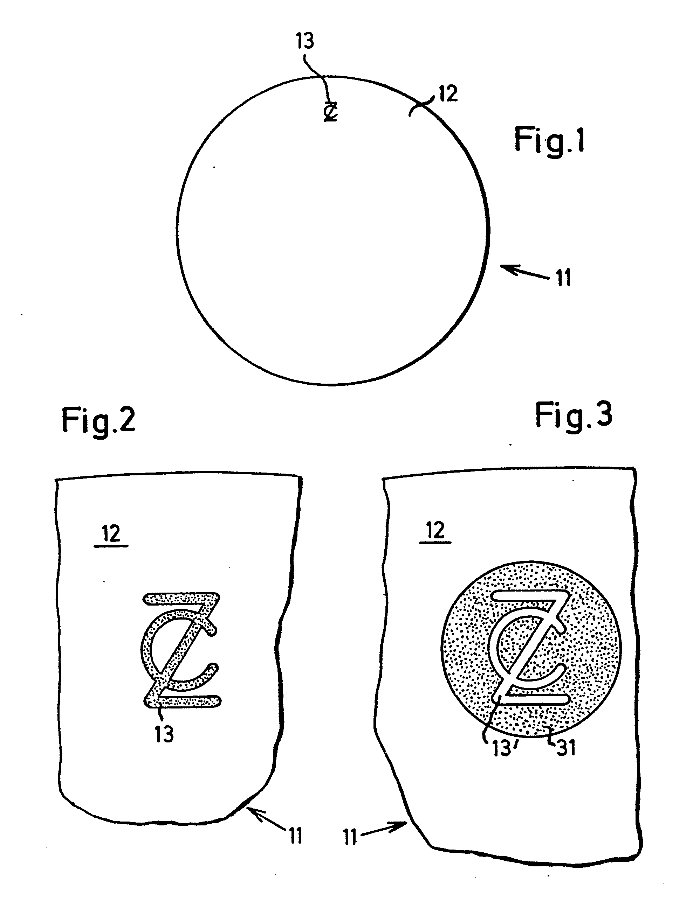

In den beigefügten Figuren sind zwei Beispiele für die Kennzeichnung einer Brillenlinse dargestellt. In Fig. 1 ist mit 11 eine Brillenlinse bezeichnet, die fast vollständig mit der reflexmindernden Schicht 12 bedeckt ist. Ausgespart ist lediglich das aus den Buchstaben C und Z bestehende Herstellerkennzeichen 13, welches in der Fig. 2 im größeren Maßstab dargestellt ist. An den Stellen der übereinandergeschriebenen Schriftzüge der Kennzeichnung 13 wurde die abwischbar haftende Substanz auf das Brillenglas 11 aufgebracht und nach dem Aufdampfen der reflexmindernden Schicht 12 wurde die Brillenlinse 11 abgewischt, so daß das mit 13 bezeichnete Kennzeichen als Aussparung in der reflexmindernden Schicht 12 entstanden ist. Bei der normalen Benutzung der Brillenlinse 11 in Durchsicht sind diese ausgesparten Bereiche nicht wahrnehmbar. Bei richtiger Betrachtung im reflektierten Licht sind sie dagegen deutlich zu erkennen.

Figur 3 zeigt die gleiche Kennzeichnung, wobei jedoch die abwischbar haftende Substanz so aufgetragen wurde, daß nach dem Abwischen die Kennzeichnung 13' eine reflexmindernde Schicht hat und von einer Aussparung 31 ohne reflexvermindernde Schicht umgeben ist.

Die Kennzeichnung kann selbstverständlich nicht nur aus Buchstaben sondern auch aus anderen Zeichen oder Darstellungen bestehen. Als Markierung sind alle üblichen Ausführungen möglich.

**Patentansprüche**

1. Brillenlinse mit einer reflexvermindernden Schicht und einer für den Brillenträger praktisch nicht sichtbaren Kennzeichnung und/oder Markierung, dadurch gekennzeichnet, daß die Kennzeichnung und/oder Markierung in der reflexvermindernden Schicht in Form von mindestens einem aus dieser Schicht ausgesparten Bereich enthalten ist.

2. Verfahren zur Herstellung einer Brillenlinse nach Anspruch 1, dadurch gekennzeichnet, daß auf die Brillenlinse eine abwischbar haftende Substanz in dem für die Kennzeichnung und/oder Markierung auszusparenden Bereich aufgebracht wird, daß anschließend eine reflexvermindernde Schicht auf die gesamte Brillenlinse aufgebracht wird und daß zu einem späteren Zeitpunkt die abwischbar haftende Substanz einschließlich der auf sie aufgebrachten reflexvermindernden Schicht abgewischt wird.

3. Verfahren nach Anspruch 2, dadurch gekennzeichnet, daß als abwischbar haftende Substanz eine zusätzlich gut sichtbare Substanz verwendet wird.

4. Verfahren nach Anspruch 2 oder 3, dadurch gekennzeichnet, daß die abwischbar haftende Substanz mit einem Stempel auf die Brillenlinse aufgebracht wird.

5. Verfahren nach Anspruch 4, dadurch gekennzeichnet, daß als abwischbar haftende Substanz normale Stempelfarbe verwendet wird.

6. Verfahren nach Anspruch 2 oder 3, dadurch gekennzeichnet, daß die abwischbar haftende Substanz durch eine Schablone auf die Brillenlinse aufgesprüht wird.

7. Verfahren nach Anspruch 2 oder 3, dadurch gekennzeichnet, daß die abwischbar haftende Substanz im Siebdruckverfahren auf die Brillenlinse aufgebracht wird.

8. Verfahren nach Anspruch 2 oder 3, dadurch gekennzeichnet, daß die abwischbar haftende Substanz im Tampondruckverfahren auf die Brillenlinse aufgebracht wird.

**Claims**

1. Ophthalmic lense with an anti-reflection coating and a identifying marking and/or control marking practically invisible for the spectacle wearer, characterized by the fact that the identifying marking and/or control marking is included in the anti-reflection coating in the form of at least one recessed area in this coating.

2. A method for producing an ophthalmic lense according to Claim 1, characterized by the fact that a removable adhering substance is coated on the ophtalmic lense in the area which is to be recessed for the identifying marking and/or control marking, that subsequent an anti-reflection coating is applied to the whole ophthalmic lense and that at a later time the removable adhering substance (inclusive the antireflection coating applied on it) is removed.

3. The method according to Claim 2, characterized by the fact that for the removable adhering substance such a substance is applied which is additionally clearly visible.

4. The method according to Claim 2 or 3, characterized by the fact that the removable adhering substance is applied to the ophthalmic lense with a stamp.

5. The method according to Claim 4, characterized by the fact that as removable adhering substance conventional stamp ink is used.

6. The method according to Claim 2 or 3, characterized by the fact that the removable adhering substance is sprayed on the ophthalmic lense through a template.

7. The method according to Claim 2 or 3, characterized by the fact that the removable adhering substance is applied to the ophthalmic lense by screen printing.

8. The method according to Claim 2 or 3, characterized by the fact that the removable adhering substance is applied to the ophthalmic lense by an intaglio printing process.

**Revendications**

1. Lentille de lunettes comportant une couche de réduction de réflexions et une désignation caractéristique et/ou un repérage pratiquement non visibles pour le porteur de lunettes, caractérisée en ce que la désignation caractéristique et/ou le repérage sont contenus dans la couche de réduction de réflexion sous la forme d'au moins une zone réservée dans ladite couche.

2. Procédé de fabrication d'une lentille de lunettes selon la revendication 1, caractérisé en ce que sur la lentille de lunettes est déposée une substance adhérente et pouvant être enlevée par essuyage dans la zone réservée pour la désignation caractéristique et/ou le repérage, en ce qu'ensuite une couche de réduction de réflexions est déposér sur la totalité de la lentille de lunettes et en ce qu'à un instant ultérieur, la substance adhérente (y compris la couche de réduction de réflexions déposée sur elle) est enlevée par essuyage.

3. Procédé selon la revendication 2, caractérisé en ce qu'on utilise comme substance adhérente pouvant être enlevée par essuyage une substance additionnellement bien visible.

4. Procédé selon la revendication 2 ou 3, caractérisé en ce que la substance adhérente pouvant être enlevée par essuyage est déposée sur la lentille de lunettes au moyen d'un timbre.

5. Procédé selon la revendication 4, caractérisé en ce que, comme substance adhérente pouvant être enlevée par essuyage, on utilise une encre de timbrage normale.

6. Procédé selon la revendication 2 ou 3, caractérisé en ce que la substance adhérente pouvant être enlevée par essuyage est pulvérisée au travers d'un gabarit sur la lentille de lunettes.

7. Procédé selon la revendications 2 ou 3, caractérisé en ce que la substance adhérente pouvant être enlevée par essuyage est déposée par un procédé d'impression par sérigraphie sur la lentille de lunettes.

8. Procédé selon la revendication 2 ou 3, caractérisé en ce que la suspension adhérente pouvant être enlevée par essuyage est déposée par un procédé d'impression au tampon sur la lentille de lunettes.

Fig.1

13

12

11

Fig.2

12

13

11

Fig.3

12

13' 31

11